# FASCICULE DE BREVET EUROPEEN

(11) **EP 1 080 431 B1**
(45) Date de publication et mention de la délivrance du brevet: **21.05.2003**
(21) Numéro de dépôt: 98939466.3
(22) Date de dépôt: 02.09.1998
(51) Int. Cl.: G06F 17/40, H03M 1/00

(54) **SYSTEME D'ACQUISITION DE DONNEES COMPRENANT UN CIRCUIT DE CONVERSION D'UN SIGNAL D'ENTREE ANALOGIQUE HAUTE FREQUENCE EN UNE PLURALITE DE SIGNAUX NUMERIQUES**
DATENERFASSUNGSSYSTEM MIT EINER SCHALTUNG ZUM UMFORMEN EINES HOCHFREQUENTEN ANALOGEN EINGANGSSIGNALS IN EINE ANZAHL VON NUMERISCHEN SIGNALEN
DATA ACQUISITION SYSTEM COMPRISING A CIRCUIT FOR CONVERTING A HIGH FREQUENCY ANALOG INPUT SIGNAL INTO A PLURALITY OF DIGITAL SIGNALS

(30) Priorité: 18.05.1998 EP 98810452
(43) Date de publication de la demande: 07.03.2001
(73) Titulaire: Acqiris, 1228 Plan-les-Ouates (CH)
(72) Inventeur: HUNGERBUEHLER, Viktor, M., CH-1242 Satigny (CH); MAURON, Bernard, CH-1292 Chambésy (CH)
(74) Mandataire: Saam, Christophe
(86) Numéro de dépôt international: CH9800377
(87) Numéro de publication internationale: WO99060494

(56) Documents cités:
- EP-A- 0 629 966
- US-A- 5 397 981
- US-A- 5 428 357
- US-A- 5 557 800
- HUBA G: "HIGH-SPEED DATA ACQUISITION WITH SDA 8020 BY DATA SPLITTING" COMPONENTS, vol. 24, no. 6, 1 décembre 1989, pages 233-235, XP000095517

## Description

La présente invention concerne un système d'acquisition de données comprenant un circuit de conversion d'un signal d'entrée analogique en une pluralité de signaux numériques, selon le préambule de la revendication 1. La présente invention concerne en particulier un système d'acquisition de données comprenant un circuit de conversion fournissant des signaux numériques aptes à être traités par un processeur numérique dans un système d'acquisition de données.

On connaît de nombreux types de systèmes d'acquisition de données, par exemple des enregistreurs transitoires et des oscilloscopes numériques, dans lesquels il est nécessaire de convertir un ou plusieurs signaux analogiques en un ou plusieurs signaux numériques aptes à être mémorisés dans une mémoire numérique et traités par un processeur numérique. Ces systèmes comprennent généralement un étage d'entrée constitué d'un ou plusieurs numériseurs et d'une mémoire pour les données numérisées ; le processeur accède le plus souvent à ladite mémoire via un bus. Dans les systèmes à basse fréquence, cette mémoire peut par exemple être constituée directement par la mémoire vive d'un ordinateur. Les données numérisées sont stockées dans cette mémoire et traitées, par exemple affichées, par le processeur de cet ordinateur soit en temps réel, soit ultérieurement, par exemple lorsque toutes les données ont été acquises.

On utilise de plus en plus souvent dans la technique électronique des signaux analogiques à très haute fréquence qui nécessitent des systèmes d'acquisition, par exemple des oscilloscopes, très rapides. On réalise actuellement des numériseurs qui travaillent avec une fréquence d'échantillonnage supérieure à 500 MHz, par exemple de l'ordre de 1GHz ou plus ; il est à prévoir que ces limites actuelles vont être dépassées avec l'apparition de composants plus performants. Ces numériseurs permettent en vertu du principe de Nyquist de fournir une représentation numérique fidèle de signaux analogiques ayant une fréquence maximale de plusieurs centaines de MHz.

Ces numériseurs ultra-rapides fournissent un mot numérique, par exemple un octet dans le cas de convertisseurs à huit bits, à chaque flanc du signal d'échantillonnage, par exemple chaque nanoseconde ; le débit numérique généré est donc extrêmement élevé, et généralement incompatible avec la fréquence d'écriture maximale des circuits de mémoire usuels. On connaît donc l'utilisation de démultiplexeurs, qui permettent dans un système d'acquisition de données de fournir en parallèle N mots délivrés en série par un numériseur. La fréquence à la sortie du démultiplexeur est divisée par N, au prix d'une multiplication par ce même facteur de la largeur du bus de données. Le démultiplexeur permet donc de réduire les exigences quant à la vitesse d'accès de la mémoire, et de délivrer en parallèle plusieurs mots fournis en série par le numériseur.

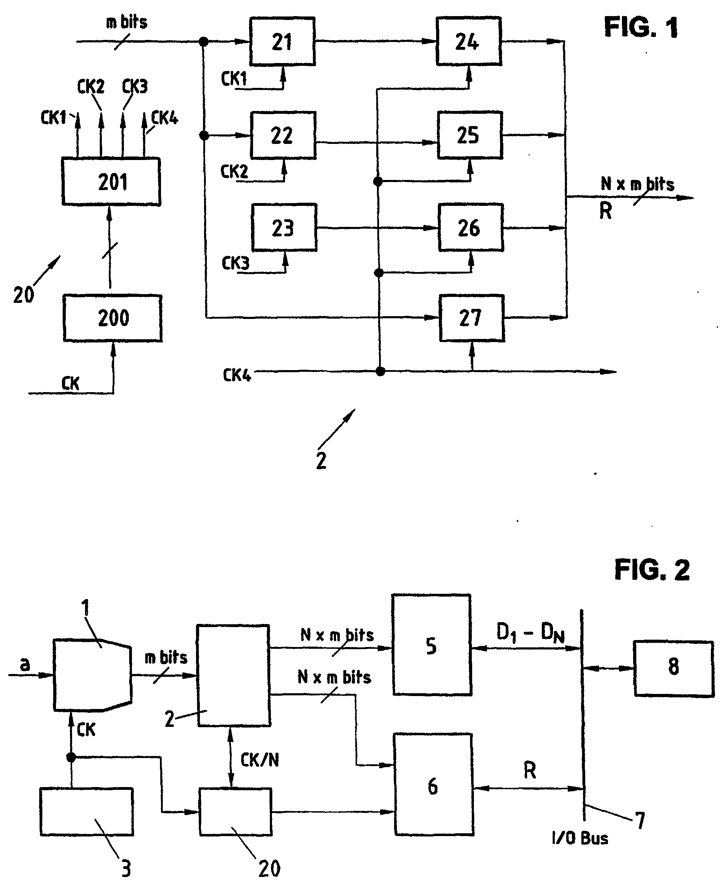

La figure 1 illustre un exemple de realisation de demultiplexeur avec un facteur de démultiplication N de 4. Il comprend un générateur de signaux d'horloge 20 et le démultiplexeur proprement dit.

Le générateur de signaux d'horloge 20 comprend un compteur à 2 bits 200 qui compte les flancs montants et/ou descendants du signal d'échantillonnage CK utilisés par les numériseurs. Les deux bits fournis par le compteur 200 sont convertis par le décodeur à 4 lignes 201 en quatre signaux CK1 à CK4 déphasés de 90° et dont la fréquence est 1/N = 1/4 de celle du signal d'échantillonnage CK.

Dans le démultiplexeur proprement dit, les mots numériques de m bits fournis par le numériseur aux flancs montants respectifs de CK1, CK2 et CK3 sont mémorisés dans des registres m bits respectifs 21, 22, 23. Au flanc montant de CK4, le mot fourni par le numériseur est enregistré dans le registre 27, et simultanément le contenu des registres 21 à 23 est copié dans les registres respectifs 24 à 26 ; les registres 24 à 27 fournissent donc en parallèle, et jusqu'au prochain flanc montant de CK4, N= 4 mots délivrés en série par le numériseur. Le démultiplexeur 2 permet donc de convertir un flux de mots de m bits en un autre flux de mots de N x m bits de débit N fois plus faible, et donc compatible avec les vitesses d'écriture des composants mémoires disponibles.

Lorsque le flux de données à analyser est continu, ou très long, il n'est pas possible de le stocker en mémoire pour un coût acceptable : il est donc nécessaire que le processeur numérique accède aux données mémorisées par le numériseur en temps réel. Le traitement des données mémorisées peut comprendre un grand nombre d'opérations différentes selon l'application, par exemple une vérification d'erreurs, une détection de minimas et de maximas, un stockage dans une mémoire permanente et un affichage sur un écran par exemple.

Les fréquences externes des processeurs numériques modernes sont comparables aux fréquences maximales des numériseurs indiquées ci-dessus. Dans le cas particulier où ces fréquences sont égales, et si le facteur de démultiplexage N vaut quatre, le processeur numérique dispose de quatre cycles seulement pour accéder à quatre mots mémorisés et pour traiter ces quatre mots. Seules des opérations de traitement relativement simples peuvent donc être effectuées en temps réel. Un choix de facteur de démultiplexage N supérieur à quatre nécessite une augmentation de la largeur de la mémoire de stockage ainsi que du bus de données du microprocesseur, et occasionne donc un surcoût important.

Le document US5'428'357 décrit un système d'acquisition dans lequel les données numérisées sont démultiplexées et traitées par plusieurs processurs avant d'être transmises à un ordinateur. L'ordinateur reçoit uniquement les données traitées et n'a pas la possibilité d'accéder directement aux données numérisées.

L'article de G. Juba intitulé « High-Speed Data Acquisition with SDA 8020 by Data Splitting », Engineering, Siemens Comonents, 24.121989, décrit un démultiplexeur permettant d'acquérir un flux de données rapides, compatible avec une logique ECL, et de le démultiplexer en plusieurs flux compatibles avec une logique TTL plus lente. Ce document ne concerne pas directement le problème de l'acquisition de données analogiques.

Un but de l'invention est de remédier à ces inconvénients, et d'étendre les possibilités de traitement et d'analyse en temps réel de données numériques à haute fréquence dans un système d'acquisition de données.

Selon l'invention, ces objectifs sont atteints au moyen d'un système d'acquisition de données comportant les éléments de la revendication 1, différentes variantes étant par ailleurs indiquées dans les revendications dépendantes.

En particulier, ces objectifs sont atteints grâce à un système d'acquisition de données comprenant un circuit de conversion d'un signal d'entrée analogique haute fréquence en une pluralité de signaux numériques aptes à être traités par un système de traitement numérique comprenant au moins un processeur numérique comprenant un circuit numérique de traitement en temps réel des données délivrées par le démultiplexeur, apte à traiter les données pendant leur mémorisation et à fournir des résultats traités audit processeur numérique.

Ce circuit numérique de traitement en temps réel traite directement les données numériques disponibles à la sortie du démultiplexeur et fournit des résultats au processeur numérique, par exemple des signaux supplémentaires ou des données dérivées des données du multiplexeur. Le processeur numérique est de cette manière déchargé des opérations de traitement de données qui peuvent être effectuées par les moyens de traitement en temps réel.

Avantageusement, le fonctionnement du circuit de traitement en temps réel peut être paramétré ou même complètement déterminé ou programmé par le processeur numérique ; une grande flexibilité est ainsi obtenue, et il est possible d'effectuer un traitement différent selon l'application sans modifier la configuration physique du circuit.

Le document de brevet US5'526'301 décrit un système d'acquisition de données comprenant un échantillonneur et des moyens de traitement analogiques du signal échantillonné. Il s'agit cependant dans ce document d'un circuit de traitement purement analogique ; aucune mémoire ou élément de stockage n'est par ailleurs prévu pour mémoriser le signal échantillonné.

L'invention sera mieux comprise à l'aide de la description d'un mode de réalisation de l'invention donné à titre d'exemple et illustré par les figures qui montrent :
La figure 1 un schéma-bloc de démultiplexeur 4 fois, déjà décrit ci-dessus.
La figure 2 un schéma-bloc d'un circuit de conversion d'un signal d'entrée analogique haute fréquence en une pluralité de signaux numériques selon l'invention.
La figure 3 un schéma-bloc d'un premier mode de réalisation d'un circuit de traitement en temps réel, basé sur N chaînes de processeurs de traitements de signaux en parallèle.
La figure 4 un schéma-bloc d'un deuxième mode de réalisation d'un circuit de traitement en temps réel, basé sur un réseau de portes (gate array).
La figure 5 un schéma-bloc d'un exemple de réalisations d'un circuit de traitement en temps réel, implémentant un détecteur d'extrémas à l'aide d'un réseau de portes programmable par l'utilisateur (FPGA).

Bien que le circuit de l'invention soit particulièrement destiné à être utilisé comme étage d'entrée dans un oscilloscope, notamment dans un oscilloscope numérique à haute fréquence, ou dans un enregistreur transitoire, l'homme du métier comprendra que ce circuit peut également être utilisé dans tout système d'acquisition de données haute-fréquence, en particulier lorsque la fréquence d'échantillonnage du ou des numériseurs est égale ou supérieure à la fréquence de bus externe du processeur numérique.

La figure 2 illustre un schéma-bloc de l'ensemble du circuit de conversion selon l'invention. Ce circuit est destiné à être utilisé comme étage d'entrée dans un système d'acquisition de données de type connu. Au moins un signal analogique (a) à analyser est converti en un signal numérique par au moins un numériseur 1 de type connu. Le numériseur 1 comprend de préférence un étage d'échantillonnage et maintien (Sample-and-Hold) et un convertisseur analogique-numérique montés en série. Le numériseur 1 fournit à chaque instant d'échantillonnage, déterminé par un signal d'horloge CK fourni par le générateur d'horloge 3, une valeur d'échantillonnage correspondant à la valeur instantanée du signal analogique a. Pour que le signal analogique 1 soit représenté de manière non équivoque par le signal numérique, le numériseur 1 doit utiliser une fréquence d'échantillonnage au moins égale à la fréquence de Nyquist, c'est-à-dire une fréquence au moins égale au double de la fréquence maximale du signal analogique. Si le circuit est destiné à analyser des signaux de plusieurs centaines de MHz, on choisira donc de préférence une fréquence d'échantillonnage supérieure à 500MHz, de préférence supérieure à 1 GHz. Dans une variante non représentée, il est également possible d'utiliser dans le cadre de cette invention plusieurs numériseurs fournissant des échantillons numériques entrelacés, afin d'augmenter la fréquence d'échantillonnage possible avec un type de numériseur donné.

La résolution du numériseur 1 dépend des besoins de l'application spécifique ; dans de nombreuses applications de haute fréquence, un numériseur à relativement basse résolution, fournissant des valeurs d'échantillonnage codées par exemple avec un nombre de bits m de 8, 10 ou 12, est suffisant, l'invention n'étant toutefois pas limitée à ces valeurs de m.

Le numériseur 1 fournit à chaque instant d'échantillonnage un mot de m bits, par exemple 8 bits toutes les nanosecondes. Ce débit est supérieur à la fréquence d'écriture maximale des mémoires vives usuelles, en sorte que pour mémoriser ces données dans une mémoire vive 5, il est nécessaire de les démultiplexer au moyen d'au moins un démultiplexeur 2. Un exemple de démultiplexeur connu a déjà été décrit ci-dessus en relation avec la figure 1 ; dans le cas d'un démultiplexeur avec un rapport N égal à quatre, il permet de diviser le débit par quatre, l'invention n'étant toutefois pas limitée à cette valeur particulière de N. Ces données démultiplexées sont mémorisées dans au moins une mémoire vive 5, l'adresse de stockage étant déterminée par un compteur d'adresse non représenté. Un système de traitement numérique, comprenant au moins un processeur numérique 8 accède ensuite aux données mémorisées D₁-D_{N} de préférence par l'intermédiaire d'un bus 7, et selon l'algorithme exécuté effectue différentes opérations de traitement, d'analyse, de stockage et/ou d'affichage de ces données sur un écran non représenté.

La mémoire vive 5 peut être constituée par n'importe quel type de mémoire dynamique ou de préférence statique, sous la forme d'un ou plusieurs modules discrets organisés selon n'importe quel schéma approprié. Dans une variante préférentielle de l'invention, la mémoire 5 est une mémoire à double accès, permettant au système de traitement numérique 8 d'accéder aux données mémorisées pendant que le démultiplexeur 2 écrit de nouvelles données. De manière préférentielle, le système de traitement numérique peut en outre accéder au compteur d'adresse non représenté pour modifier l'adresse à laquelle les données démultiplexées sont écrites, ou pour modifier l'organisation de cette mémoire en organisant par exemple un ou plusieurs segments à l'intérieur de cette mémoire.

Selon l'invention, le circuit de conversion comporte au moins un circuit numérique de traitement en temps réel 6 relié directement à la sortie du démultiplexeur 2 et apte à effectuer un traitement en temps des données fournies par ce dernier. Le circuit numérique 6 est synchronisé par les signaux fournis par le générateur d'horloge 20 ; le traitement des données démultiplexées est effectué parallèlement à leur mémorisation dans la mémoire 5. Nous verrons plus loin différents exemples de mode de réalisation d'un circuit de traitement 6, correspondant à différents traitements effectués sur les données démultiplexées. Le circuit numérique de traitement 6 fournit un résultat numérique R traité au système de traitement numérique. Le résultat numérique R peut selon l'application et le traitement effectué inclure par exemple un seul bit, par exemple un bit de détection d'erreur ou de détection de situation particulière dans les données numériques, par exemple un bit de détection de zéro ou de maximum. Ce bit peut par exemple être fourni sur une ligne de données du bus 7, ou dans une variante être directement relié à une ligne d'interruption matérielle du processeur numérique 8 ou d'un autre composant du système numérique. Dans une variante, le circuit numérique de traitement peut également fournir un résultat R sur plus d'un bit, par exemple sur un ou plusieurs octets, accessible à une adresse prédéterminée sur le bus 7. Le résultat R peut par exemple inclure des données de type semi-statique, et indiquer par exemple un état semi-permanent des données numériques ; dans une variante, le circuit numérique de traitement 6 peut également fournir un résultat R sous la forme d'un flux continu de données, par exemple à la même fréquence que les données du démultiplexeur. Le circuit de traitement 6 peut par exemple effectuer un filtrage ou un moyennage en temps réel des données numériques.

Il est également possible dans le cadre de cette invention de prévoir plusieurs circuits 6 branchés en parallèle effectuant différents traitements sur les données démultiplexées, et fournissant différents résultats R1, R2, etc.. à différentes adresses sur le bus 7. Par exemple, il est possible de prévoir un circuit effectuant une détection d'extrémas, un second circuit effectuant une détection de passage par zéro, un troisième circuit effectuant un filtrage numérique en temps réel, etc..

Le circuit numérique de traitement 6 comprend de préférence une zone de mémoire ou de registre, non représentée, dans laquelle le résultat du traitement est mémorisé. Cette zone de mémoire peut être accédée par le système de traitement numérique 8 à une adresse prédéterminée. Dans une variante non représentée, le circuit numérique 6 peut également écrire des résultats dans une portion de la mémoire 5.

Le système de traitement numérique 8 peut accéder selon le programme exécuté soit aux données D₁-D_{N} mémorisées dans la mémoire 5, soit aux résultats R délivrés par le circuit 6, soit aux deux à la fois. Il accède aux résultats R du circuit numérique de traitement 6 de préférence par l'intermédiaire des lignes de données du bus 7 ou, comme évoqué, de lignes d'interruption. Par exemple, dans le cas où le circuit de traitement 6 effectue une détection d'erreur ou d'événement particulier sur le signal d'entrée, il est possible de modifier au moyen d'un signal d'interruption le déroulement du programme exécuté par le processeur numérique 8 lorsqu'une erreur ou une configuration particulière est effectivement détectée. Le signal d'interruption R pouvant éventuellement être généré avant même que le système numérique n'accède aux données correspondantes dans la mémoire 5, il est donc possible de modifier le traitement ou l'affichage de ces données lorsqu'un tel événement est détecté.

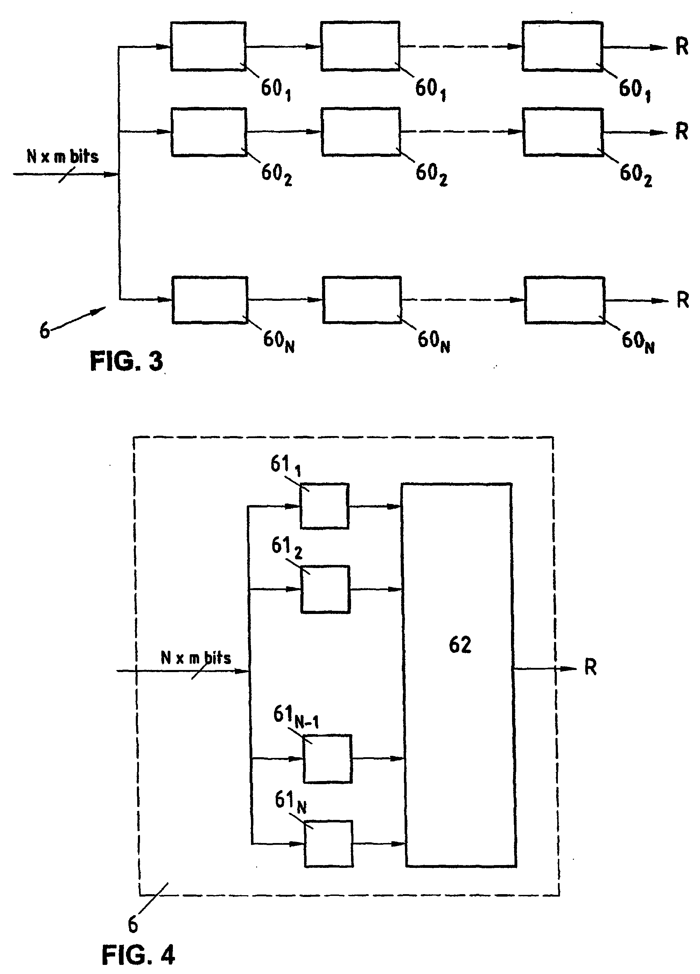

Le circuit numérique de traitement 6 accède aux données à fréquence réduite fournies par le démultiplexeur 2. Ces données sont démultiplexées, en sorte que le circuit numérique 6 doit effectuer un traitement en parallèle sur N mots numériques. La figure 3 illustre un mode de réalisation possible, flexible mais onéreux, d'un circuit numérique de traitement 6. Dans cette variante, chacun des N mots de m bits délivrés par le démultiplexeur 2 est traité par un système de traitement autonome, dans cet exemple par un ou plusieurs processeurs de signaux numériques (DSP) 60₁, 60₂, ..., 60_{N}. Dans le cas le plus général représenté, chaque mot est traité par une pluralité de processeurs de signaux numériques en série ; il est bien entendu toutefois que selon l'application et le traitement effectué, un seul processeur de signal par mot de m bits peut être utilisé. De même, il est possible selon l'application d'utiliser un autre élément qu'un processeur de signal numérique pour traiter chaque mot, par exemple un processeur polyvalent, un composant numérique quelconque ou un circuit intégré spécifique (ASIC) par exemple.

Sur le schéma de la figure 3, chaque composant 60₁ jusqu'à 60_{N} traite un mot sans tenir compte des traitements effectués par les autres composants. Selon l'application, il est cependant possible de relier les différents processeurs en réseau, de manière à ce que le composant 60ᵢ par exemple puisse accéder aux données en entrée et/ou en sortie d'un autre composant 60ⱼ.

Les différents composants 60₁ à 60_{N} déterminent des résultats qui sont mémorisés dans des registres ou dans une zone de mémoire non représentés, et liés au bus 7. Dans le cas de composants programmables, par exemple de processeurs numériques, ces composants exécutent un programme stocké dans une mémoire vive ou morte non représentée. Dans une variante préférentielle, le contenu de cette mémoire peut être modifié par le système de traitement numérique 8, par l'intermédiaire du bus 7. De cette manière, le programme exécuté par le système de traitement numérique 8 peut modifier l'opération de traitement effectuée par les processeurs 60 selon les besoins de l'application.

Dans l'exemple de la figure 3, le nombre de chaînes de composants 60 en parallèle est égal au facteur de démultiplication N du démultiplexeur 2. Il est cependant également possible d'utiliser un nombre de chaînes de composants en parallèle différents ; par exemple, si la largeur m des mots convertis par les numériseurs 1 est de huit bits, il est possible en utilisant des processeurs numériques 60 à 16 bits de diviser par deux le nombre N de processeurs numériques nécessaires pour certaines opérations, ou par quatre avec des processeurs 32 bits. Il est évident toutefois que seules certaines opérations particulières peuvent être effectuées indifféremment avec N processeurs à m bits ou N/2 processeurs à 2m bits, et que la flexibilité du système est donc réduite en réduisant le nombre de processeurs.

La figure 4 illustre une variante de mode de réalisation d'un circuit numérique de traitement 6, qui fait appel à un réseau de portes, structure généralement désignée par l'appellation anglo-saxonne de gate array. De préférence, le circuit 6 est constitué par une structure de réseaux de porte programmable par l'utilisateur, connue sous le nom de FPGA (field programmable gate array). De nombreux exemples de circuit comportant une telle structure sont par exemple décrits dans des documents de brevets classés notamment dans le groupe H03K-19/177 de la classification internationale des brevets ; nous ne décrirons donc pas plus en détail ces circuits.

Chaque mot de m bits démultiplexé est tout d'abord mémorisé dans un registre correspondant 61₁ à 61_{N}. Selon l'application, un traitement approprié est effectué par l'élément FPGA 62, qui exécute un algorithme approprié implémenté sous forme câblée. L'élément 62 fournit un résultat sous la forme d'un ou plusieurs bits, de préférence mémorisé dans un registre non représenté accessible par le processeur 8 au travers du bus 7.

De préférence, l'élément 62 est de type SRAM-FPGA. Ce composant exécute alors une opération de traitement déterminée par un algorithme mémorisé dans une mémoire vive de type SRAM (static RAM) (non représentée), dont le contenu permet de reprogrammer le composant 62. Dans une variante préférentielle de l'invention, le système de traitement numérique 8 peut accéder en écriture au travers du bus 7 au contenu de ladite SRAM, de manière à modifier le traitement effectué par le composant 62 selon les besoins de l'application.

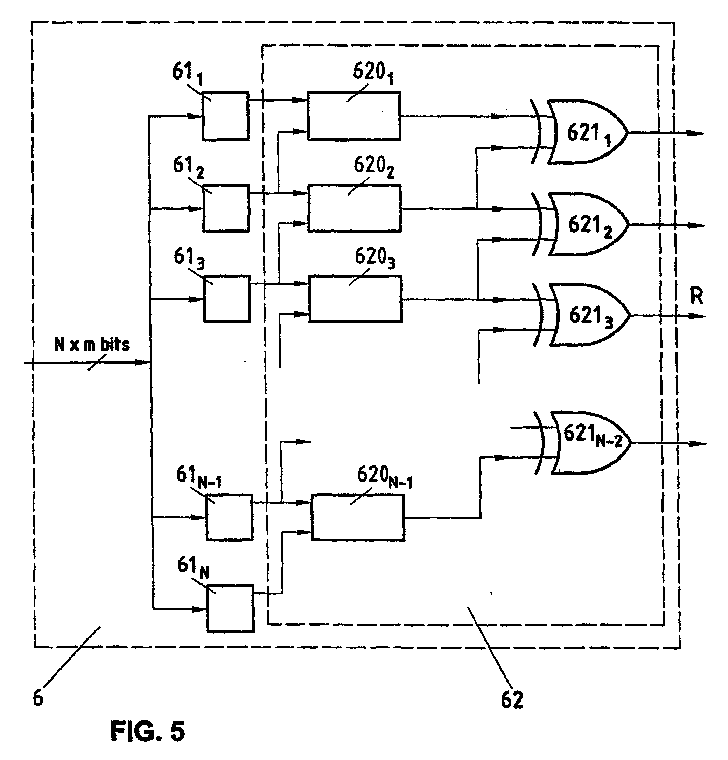

La figure 5 illustre un schéma électrique équivalent d'un détecteur d'extrémas réalisé au moyen d'un réseau de portes selon la figure 4. Le circuit illustré est par exemple obtenu au moyen d'un programme particulier chargé dans la mémoire SRAM (non illustrée) d'un circuit FPGA 62 ; un autre programme permettrait d'obtenir un autre circuit équivalent, pour effectuer un traitement différent des données démultiplexées. Sur le circuit illustré, un comparateur à m bits 620ⱼ compare le mot de m bits mémorisé dans chaque registre correspondant 61ⱼ avec le mot dans le registre suivant 61ⱼ₊₁. Le signal binaire fournit par le comparateur 620ⱼ prend l'état logique 1 si la valeur d'échantillonnage à l'instant tᵢ, contenue dans le registre 61ⱼ est supérieure à la valeur d'échantillonnage à l'instant suivant tⱼ₊₁, contenue dans le registre 61ⱼ₊₁. Dans le cas contraire, le comparateur 620i fournit un état logique 0. Le signal fourni par les N-1 comparateurs 620 indique donc le signe de la dérivée du signal numérique à l'instant d'échantillonnage considéré. Un changement de signe correspond à un extrémum (maximum ou minimum) local du signal ; ces changements de signe sont détectés par une batterie de portes ou-exclusif 621, qui fournissent chacune en sortie un signal qui vaut un seulement en cas d'extréma du signal numérique à l'instant d'échantillonnage considéré. Le circuit numérique de traitement 62 fournit donc dans ce cas un signal à N-2 bits, indiquant au système de traitement numérique 8 la présence éventuelle et la position d'un extréma local dans le signal numérique.

L'homme du métier comprendra que d'autres réalisations du circuit numérique de traitement 6 peuvent être réalisées dans le cadre de cette invention afin d'effectuer différentes opérations de traitement et/ou d'analyse des données numérisées en fonction de l'application exécutée par le processeur numérique 8.

En particulier, il est également possible d'utiliser un circuit numérique 6 comme linéariseur (look-up table) pour linéariser la courbe entrée/sortie de l'ensemble du système d'acquisition.

## Revendications

1. Système d'acquisition de données comprenant au moins un circuit de conversion d'un signal d'entrée analogique haute fréquence (a) en une pluralité de signaux numériques (D₁-D_{N}, R) aptes à être traités par un système de traitement numérique comprenant au moins un processeur numérique (8) comprenant :
au moins un numériseur (1) à m bits,
au moins un démultiplexeur (2) pour délivrer en parallèle N valeurs d'échantillonnage à m bits fournies successivement par ledit numériseur (1),
au moins un circuit numérique de traitement (6) en temps réel desdites valeurs d'échantillonnage démultiplexées, relié à la sortie dudit démultiplexeur (2) et apte à fournir des résultats traités audit système de traitement numérique (8),
**caractérisé par** au moins une mémoire (5) pour mémoriser les valeurs d'échantillonnage démultiplexées, ladite mémoire (5) étant accessible par ledit système de traitement numérique (8).

2. Système d'acquisition de données selon la revendication précédente, **caractérisé en ce que** la fréquence d'échantillonnage dudit numériseur (1) est supérieure à la fréquence de bus externe dudit processeur numérique (8).

3. Système d'acquisition de données selon l'une des revendications précédentes, **caractérisé en ce que** ledit circuit de traitement (6) en temps réel comprend N systèmes de traitement (60₁-60_{N}) en parallèle.

4. Système d'acquisition de données selon la revendication précédente, **caractérisé en ce que** chaque système de traitement en parallèle (60₁-60_{N}) comporte au moins un processeur de signal numérique.

5. Système d'acquisition de données selon l'une des revendications 3 ou 4, **caractérisé en ce que** le programme exécuté par au moins un desdits systèmes de traitement en parallèle (60₁-60_{N}) peut être modifié par ledit système de traitement numérique (8).

6. Système d'acquisition de données selon l'une des revendications 1 ou 2, **caractérisé en ce que** ledit circuit de traitement en temps réel (6) comprend un ou plusieurs circuits de type gate arrays (62).

7. Système d'acquisition de données selon la revendication précédente, **caractérisé en ce que** ledit circuit de traitement en temps réel comprend un ou plusieurs circuits de type field programmable gate arrays (62).

8. Système d'acquisition de données selon la revendication précédente, **caractérisé en ce que** ledit circuit de traitement en temps réel comprend un ou plusieurs circuits de type field programmable gate arrays (62) dont le fonctionnement est déterminé par le contenu d'une mémoire vive.

9. Système d'acquisition de données selon la revendication précédente, **caractérisé en ce que** ladite mémoire vive est accessible en écriture par ledit système de traitement numérique (8).

10. Système d'acquisition de données selon l'une des revendications précédentes, **caractérisé par** des moyens de stockage apte à mémoriser lesdits résultats (R) fournis par ledit circuit de traitement (6).

11. Système d'acquisition de données selon l'une des revendications précédentes, **caractérisé en ce que** ledit circuit de traitement en temps réel (6) fournit un signal d'interruption audit processeur numérique (8).

12. Système d'acquisition de données selon l'une des revendications précédentes, **caractérisé en ce que** ledit circuit de traitement (6) constitue un filtre numérique.

13. Système d'acquisition de données selon l'une des revendications précédentes, **caractérisé en ce que** ledit circuit de traitement (6) constitue un détecteur d'extremas.

14. Système d'acquisition de données selon l'une des revendications précédentes, **caractérisé en ce que** ledit circuit de traitement (6) constitue un linéariseur de la caractéristique de transfert du système d'acquisition.

15. Système d'acquisition de données selon l'une des revendications précédentes, **caractérisé en ce que** ladite mémoire (5) est constituée par une mémoire à double accès accessible simultanément par ledit circuit de traitement numérique (8) et par ledit démultiplexeur (2).

16. Oscilloscope numérique comprenant un système d'acquisition de données selon l'une des revendications précédentes.

## Claims

1. Data acquisition system comprising at least one circuit for converting a high-frequency input analog signal (a) into a plurality of digital signals (D₁-D_{N}, R) for being processed by a digital processing system comprising at least one digital processor (8) comprising:
at least one digitizer (1) at m bits,
at least one demultiplexer (2) for delivering in parallel N sample values at m bits supplied in series by said digitizer (1),
at least one real time digital processing circuit (6) for processing in real time said demultiplexed sample values, connected to the output of said demultiplexer (2) and capable of supplying processed results to said digital processing system (8),
**characterized by** at least one memory (5) for storing the demultiplexed sample values, said memory (5) being accessible by said digital processing system (8).

2. Data acquisition system according to the preceding claim, **characterized in that** the sample frequency of said digitizer (1) is greater than the external bus frequency of said digital processor (8).

3. Data acquisition system according to one of the preceding claims, **characterized in that** said real-time digital processing circuit (6) comprises N processing systems in parallel (60₁-60_{N}).

4. Data acquisition system according to the preceding claim, **characterized in that** each processing system in parallel (60₁-60_{N}) comprises at least one digital signal processor.

5. Data acquisition system according to one of the claims 3 or 4, **characterized in that** the program executed by at least one of said processing systems in parallel (60₁-60_{N}) can be modified by said digital processing system (8).

6. Data acquisition system according to one of the claims 1 or 2, **characterized in that** said real time digital processing circuit (6) comprises one or several circuits of the type gate array (62).

7. Data acquisition system according to the preceding claim, **characterized in that** said real time digital processing circuit comprises one or several circuits of the type field programmable gate array (62).

8. Data acquisition system according to the preceding claim, **characterized in that** said real time digital processing circuit comprises one or several circuits of the type field programmable gate array (62) whose operation is determined by the contents of a RAM.

9. Data acquisition system according to the preceding claim, **characterized in that** said RAM can be accessed in writing by said digital processing system (8).

10. Data acquisition system according to one of the preceding claims, **characterized by** storage means capable of memorizing said results (R) supplied by said processing circuit (6).

11. Data acquisition system according to one of the preceding claims, wherein said real time digital processing circuit (6) supplies an interrupt signal to said digital processing system (8).

12. Data acquisition system according to one of the preceding claims, **characterized in that** said real time digital processing circuit (6) constitutes a digital filter.

13. Data acquisition system according to one of the preceding claims, **characterized in that** said real time digital processing circuit (6) constitutes a detector of extremes.

14. Data acquisition system according to one of the preceding claims, **characterized in that** said real time digital processing circuit (6) constitutes a linearizer of the transfer characteristic of the acquisition system.

15. Data acquisition system according to one of the preceding claims, **characterized in that** said memory is constituted by a double access memory accessible simultaneously by said digital processing system (8) and by said demultiplexer (2).

16. Digital oscilloscope comprising a data acquisition system according to one of the preceding claims.

## Patentansprüche

1. Datenerfassunsgssystem bestehend aus mindestens einer Schaltung für die Umwandlung eines hochfrequenz analogen Eingangssignals (a) in eine Mehrzahl von digitalen Signalen (D₁-D_{N}, R), welche durch ein aus mindestens einem digitalen Prozessor (8) bestehendes digitales Bearbeitungssystem bearbeitet werden kann, bestehend aus:
mindestens einem Digitalisierer (1) mit m Bits,
mindestens einem Demultiplexer (2), um parallel N Musterwerte mit m Bits zu liefern, welche nacheinander vom benannten Digitalisierer (1) geliefert wurden,
mindestens einem digitalen Bearbeitungsschaltkreis (6) zur Bearbeitung in Echtzeit von benannten demultiplexierten Musterwerten, verbunden mit dem Ausgang vom benannten Demultiplexer (2) und fähig, die verarbeiteten Resultate dem benannten digitalen Bearbeitungssystem (8) zu liefern,
**gekennzeichnet durch** mindestens einen Speicher (5) zur Speicherung der demultiplexierten Musterwerte, wobei auf benannten Speicher (5) vom benannten digitalen Bearbeitungssystem (8) zugegriffen werden kann.

2. Datenerfassunsgssystem gemäss dem vorhergehenden Anspruch, **dadurch gekennzeichnet, dass** die Musterfrequenz vom benannten Digitalisierer (1) grösser als die externe Busfrequenz des benannten digitalen Prozessor (8) ist.

3. Datenerfassunsgssystem gemäss einem der vorhergehenden Ansprüche, **dadurch gekennzeichnet, dass** benannter digitaler Bearbeitungsschaltkreis in Echtzeit (6) N parallele Bearbeitungssysteme (60₁-60_{N}) beinhaltet.

4. Datenerfassunsgssystem gemäss dem vorhergehenden Anspruch, **dadurch gekennzeichnet, dass** jedes parallele Bearbeitungssystem (60₁-60_{N}) mindestens einen Digitalsignalprozessor enthält.

5. Datenerfassunsgssystem gemäss einem der Ansprüche 3 oder 4, **dadurch gekennzeichnet, dass** das von mindestens einem der benannten parallelen Bearbeitungssysteme (60₁-60_{N}) ausgeführte Programm vom benannten digitalen Bearbeitungssystem (8) modifiziert werden kann.

6. Datenerfassunsgssystem gemäss einem der Ansprüche 1 oder 2, **dadurch gekennzeichnet, dass** benannter digitaler Bearbeitungsschaltkreis in Echtzeit (6) einen oder mehrere Schaltkreise vom Typ "Gate-array" (62) enthält.

7. Datenerfassunsgssystem gemäss dem vorhergehenden Anspruch, **dadurch gekennzeichnet, dass** benannter digitaler Bearbeitungsschaltkreis in Echtzeit einen oder mehrere Schaltkreise vom Typ "field programmable Gate-Array" (62) enthält.

8. Datenerfassunsgssystem gemäss dem vorhergehenden Anspruch, **dadurch gekennzeichnet, dass** benannter digitaler Bearbeitungsschaltkreis in Echtzeit (6) einen oder mehrere Schaltkreise vom Typ "field programmable Gate-Array" (62) enthält, deren Operation vom Inhalte eines RAM bestimmt wird.

9. Datenerfassunsgssystem gemäss dem vorhergehenden Anspruch, **dadurch gekennzeichnet, dass** auf benanntes RAM schreibenderweise vom benannten Bearbeitungssystem (8) zugegriffen werden kann.

10. Datenerfassunsgssystem gemäss einem der vorhergehenden Ansprüche, **gekennzeichnet durch** Speichermittel, die dazu geeignet sind, die benannten vom benannten Bearbeitungsschaltkreis (6) gelieferten Resultate (R) abzuspeichern.

11. Datenerfassunsgssystem gemäss einem der vorhergehenden Ansprüche, **dadurch gekennzeichnet, dass** benannter digitaler Bearbeitungsschaltkreis in Echtzeit (6) ein Unterbruchsignal an benanntes digitales Bearbeitungssystem (8) liefert.

12. Datenerfassunsgssystem gemäss einem der vorhergehenden Ansprüche, **dadurch gekennzeichnet, dass** benannter digitaler Bearbeitungsschaltkreis in Echtzeit (6) einen digitalen Filter darstellt.

13. Datenerfassunsgssystem gemäss einem der vorhergehenden Ansprüche, **dadurch gekennzeichnet, dass** benannter digitaler Bearbeitungsschaltkreis in Echtzeit (6) einen Detektor von Extremen darstellt.

14. Datenerfassunsgssystem gemäss einem der vorhergehenden Ansprüche, **dadurch gekennzeichnet, dass** benannter digitaler Bearbeitungsschaltkreis in Echtzeit (6) ein Linearisierer der Übertragungskennlinie des Erfassungssystems darstellt.

15. Datenerfassunsgssystem gemäss einem der vorhergehenden Ansprüche, **dadurch gekennzeichnet, dass** benannter Speicher (5) aus einem Doppelzugriffspeicher besteht, auf den gleichzeitig vom benannten digitalen Bearbeitungssystem (8) und vom benannten Demultiplexer (2) zugegriffen werden kann.

16. Digitales Oszilloskop beinhaltend ein Datenerfassunsgssystem gemäss einem der vorhergehenden Ansprüche.
